# EUROPEAN PATENT SPECIFICATION

(11) **EP 4 299 396 B1**
(45) Date of publication and mention of the grant of the patent: **01.04.2026**
(21) Application number: 21934709.3
(22) Date of filing: 30.12.2021
(51) Int. Cl.: B60W 20/30, B60W 10/06, B60W 10/08, B60W 10/02, B60K 6/26

(54) **VEHICLE ENGINE STARTING AND GEAR SHIFTING COORDINATION CONTROL METHOD AND APPARATUS, AND TERMINAL DEVICE**
VERFAHREN UND VORRICHTUNG ZUR STEUERUNG DES STARTENS UND GANGSCHALTUNGSKOORDINATION EINES FAHRZEUGMOTORS UND ENDGERÄTEVORRICHTUNG
PROCÉDÉ ET APPAREIL DE COMMANDE DE COORDINATION DE DÉMARRAGE DE MOTEUR ET DE CHANGEMENT DE VITESSE DE VÉHICULE, ET DISPOSITIF TERMINAL

(30) Priority: 30.03.2021 CN 202110343019
(43) Date of publication of application: 03.01.2024
(73) Proprietor: Great Wall Motor Company Limited, Baoding, Hebei 071000 (CN)
(72) Inventor: CHAI, Guoyao, Baoding, Hebei 071000 (CN); SONG, Haijun, Baoding, Hebei 071000 (CN); CHEN, Qilin, Baoding, Hebei 071000 (CN)
(74) Representative: dompatent
(86) International application number: PCT/CN2021/143016
(87) International publication number: WO 2022/206073

(56) References cited:
- CN-A- 102 060 013
- CN-A- 102 463 987
- CN-A- 103 338 959
- CN-A- 103 347 766
- CN-A- 110 304 034
- JP-A- 2011 020 540
- US-A1- 2017 291 595
- US-A1- 2019 039 602
- US-A1- 2020 023 726
- US-B2- 9 758 149

## Description

The present patent application claims the priority of the Chinese patent application filed on March 30th, 2021 with the application number of CN202110343019.6.

### TECHNICAL FIELD

The present application relates to the technical field of vehicle controlling and, more particularly, to a method and apparatus for coordinated control over starting and gear shifting of an engine of a vehicle a computer program and a computer-readable storage medium.

### BACKGROUND

For P2 (electric machine on the gear input)-architecture hybrid power vehicles, during the process that the engine is started, a hybrid control unit (HCU) may coordinate and control each component. At the dragging stage, i.e., the stage at which the P2 motor generates a dragging torque and the K0 clutch is pressed tightly and the torque is increased to drag the engine to start, that is equivalent to that one engine load is added to drag the P2 motor, which causes the rotational speed of the P2 motor to decrease. If, at this moment, the vehicle has a gear-shifting action, a transmission control unit (TCU) may control a K1 clutch and a K2 clutch inside a hybrid-power double-clutch automatic gearbox (HDCT) to perform torque interaction; in other words, one of the clutches is opened and the other of the clutches is engaged. The torque at the HDCT side may also cause the rotational speed of the P2 motor to decrease. Furthermore, at this moment, the input terminal of the HDCT and the output terminal of the P2 motor are engaged closely, the slip between the K1 clutch or the K2 clutch and the P2 motor is low, and a slight fluctuation of the rotational speed of the P2 motor may be transmitted to the shaft end, which causes the fluctuation of the acceleration of the entire vehicle, thereby the drivability is deteriorated. Therefore, it is required to consider a controlling strategy in which the dragging stage and the stage of the torque interaction of the HDCT are staggered.

Currently, the controlling strategy that the gear-shifting action is performed in the process that the engine is started is staggering the process of the starting and the process of the gear shifting; in other words, the gear shifting is forbidden during the process of the starting. However, such a controlling strategy easily results in performing the gear-shifting action immediately after the process of the starting ends, and the rotational speed of the engine increases with the shaft speed, which causes that the rotational speed of the engine is high, and the entire vehicle has a poor NVH (Noise, Vibration, Harshness) performance at a low vehicle speed.
US2020023726A1 relates to a control device that controls a vehicle drive device for changing a drive mode from an EV mode to a hybrid mode while a vehicle is travelling. The vehicle drive device comprises a transfer clutch device, an electric motor and a transmission device comprising a plurality of shift clutch devices. The control device performs engine start control while the vehicle is travelling, and a shift clutch device is being downshifted in parallel. By downshifting, the electric motor can generate higher torque, thereby quickly dragging the engine to the speed at which it can be ignited.
US2019039602A1 relates to a control device that controls a vehicle drive device for changing a drive mode from an EV mode to a hybrid mode while a vehicle is travelling. The vehicle drive device comprises a transfer clutch device, an electric motor and a transmission device comprising a plurality of shift clutch devices. The control device performs engine start control while the vehicle is travelling. The electric motor drags the engine to the speed at which it can be ignited A shift operation is performed after synchronization between the rotational speed of the engine and the rotational speed of the electric machine, the rotational speed (Nin) of the electric machine is changed to a shifted synchronous rotational speed (Nsa) by the rotational speed control of the electric machine.

### SUMMARY

In view of the above, the embodiments of the present application provide a method for coordinated control over starting and gear shifting of an engine of a vehicle, an apparatus a computer program and a computer-readable storage medium, to solve the problem of the existing controlling strategy may result in that the rotational speed of the engine is high, and the entire-vehicle NVH performance is poor at a low vehicle speed.

The first aspect of the embodiments of the present application provides a method for coordinated control over starting and gear shifting of an engine of a vehicle, including:
if a starting type of the vehicle is gear-shifting dynamic starting, controlling a clutch inside a gearbox to reduce a torque, and regulating a speed regulating torque for establishing a slip of a P2 motor, so that an absolute value of a difference between a rotational speed of the P2 motor and a target rotational speed is less than a first preset difference, wherein the gear-shifting dynamic starting refers to performing a gear-shifting action simultaneously with controlling the starting of the engine;
controlling a rotational speed of the engine to reach a first preset rotational speed, and when the rotational speed of the engine reaches the first preset rotational speed, sending an oil-injection and ignition command to the engine;
determining a slip exiting moment, and at the slip exiting moment, controlling the P2 motor to exit from the speed regulating torque for establishing the slip, and controlling the clutch inside the gearbox to perform a return-torque action; and
controlling the rotational speed of the P2 motor, the rotational speed of the engine and a shaft speed of an input shaft of the gearbox to be synchronous, to complete the gear-shifting dynamic starting.

In an embodiment of the present application, controlling the clutch inside the gearbox to reduce the torque includes:
obtaining a driving torque of the P2 motor, and sending the driving torque to a TCU, so that the TCU, according to the driving torque, controls the clutch inside the gearbox to reduce the torque.

In an embodiment of the present application, regulating the speed regulating torque for establishing the slip of the P2 motor includes:
obtaining a target slip, and regulating the speed regulating torque of the P2 motor, so that the slip of the P2 motor reaches the target slip.

In an embodiment of the present application, the target slip is a preset value inside an HCU.

In an embodiment of the present application, controlling the rotational speed of the engine to reach the first preset rotational speed includes:
controlling a K0 clutch and the P2 motor to increase the torque, respectively, so that the rotational speed of the engine reaches the first preset rotational speed.

In an embodiment of the present application, determining the slip exiting moment includes:
monitoring the rotational speed of the engine and a torque of a K0 clutch; and
determining a moment when the rotational speed of the engine is greater than or equal to a second preset rotational speed and the torque of the K0 clutch is less than or equal to a preset torque to be the slip exiting moment.

In an embodiment of the present application, the second preset rotational speed is greater than or equal to the first preset rotational speed.

In an embodiment of the present application, controlling the P2 motor to exit from the speed regulating torque for establishing the slip includes:
controlling the P2 motor to reduce a torque with a gradient, to exit from the speed regulating torque.

In an embodiment of the present application, at the slip exiting moment, a K0 clutch starts reducing a torque with a gradient.

In an embodiment of the present application, controlling the clutch inside the gearbox to perform the return-torque action includes:
causing the clutch inside the gearbox to increase the torque, and the increased torque value being equal to a torque value by which the torque is reduced in the action of controlling the clutch inside the gearbox to reduce the torque.

In an embodiment of the present application, controlling the rotational speed of the P2 motor, the rotational speed of the engine and the shaft speed of the input shaft of the gearbox to be synchronous includes:
when an absolute value of a difference between the rotational speed of the engine and the rotational speed of the P2 motor is less than a second preset difference, controlling a K0 clutch to increase a torque, so that the rotational speed of the engine and the rotational speed of the P2 motor are synchronous; and
controlling the P2 motor to reduce the speed regulating torque, so that the rotational speed of the P2 motor, the rotational speed of the engine and the shaft speed of the input shaft of the gearbox are synchronous.

In an embodiment of the present application, controlling the P2 motor to reduce the speed regulating torque includes:
receiving a quick-torque-reduction request sent by a TCU, and according to the quick-torque-reduction request, controlling the P2 motor to reduce the speed regulating torque.

The second aspect of the embodiments of the present application provides an apparatus for coordinated control over starting and gear shifting of an engine of a vehicle, including:
a slip establishing module configured for, if a starting type of the vehicle is gear-shifting dynamic starting, controlling a clutch inside a gearbox to reduce a torque, and regulating a speed regulating torque for establishing a slip of a P2 motor, so that an absolute value of a difference between a rotational speed of the P2 motor and a target rotational speed is less than a first preset difference, wherein the gear-shifting dynamic starting refers to performing a gear-shifting action simultaneously with controlling the starting of the engine;
a speed regulating module configured for controlling a rotational speed of the engine to reach a first preset rotational speed, and when the rotational speed of the engine reaches the first preset rotational speed, sending an oil-injection and ignition command to the engine;
a slip exiting module configured for determining a slip exiting moment, and at the slip exiting moment, controlling the P2 motor to exit from the speed regulating torque for establishing the slip, and controlling the clutch inside the gearbox to perform a return-torque action; and
a speed synchronizing module configured for controlling the rotational speed of the P2 motor, the rotational speed of the engine and a shaft speed of an input shaft of the gearbox to be synchronous, to complete the gear-shifting dynamic starting.

The third aspect of the embodiments of the present application provides a computer program that is stored in a memory and executable in a processor, and the processor, when executing the computer program, implements the steps of the method for the coordinated control over the starting and the gear shifting of the engine of the vehicle according to any one of the embodiments in the first aspect.

The fourth aspect of the embodiments of the present application provides a computer-readable storage medium, and the computer-readable storage medium stores a computer program, and the computer program, when executed by one or more processors, implements the steps of the method for the coordinated control over the starting and the gear shifting of the engine of the vehicle according to any one of the embodiments in the first aspect.

The embodiments of the present application comparing with the prior art has the advantageous effects as follows: in the embodiments of the present application, firstly, if a starting type of the vehicle is gear-shifting dynamic starting, a clutch inside a gearbox is controlled to reduce a torque, and a speed regulating torque for establishing a slip of a P2 motor is regulated, so that an absolute value of a difference between a rotational speed of the P2 motor and a target rotational speed is less than a first preset difference; subsequently, a rotational speed of the engine is controlled to reach a first preset rotational speed, and when the rotational speed of the engine reaches the first preset rotational speed, an oil-injection and ignition command is sent to the engine; subsequently, a slip exiting moment is determined, and at the slip exiting moment, the P2 motor is controlled to exit from the speed regulating torque for establishing the slip, and the clutch inside the gearbox is controlled to perform a return-torque action; and finally, the rotational speed of the P2 motor, the rotational speed of the engine and a shaft speed of an input shaft of the gearbox are controlled to be synchronous, to complete the gear-shifting dynamic starting. The embodiments of the present application can effectively solve the problem in the prior art that the rotational speed of the engine is high and the entire-vehicle NVH performance is poor at a low vehicle speed, and the entire-vehicle NVH performance can be improved.

### BRIEF DESCRIPTION OF THE DRAWINGS

In order to more clearly illustrate the technical solutions of the embodiments of the present application, the figures that are required to use in the description of the embodiments or the prior art may be briefly introduced below. Apparently, the figures that are described below are some embodiments of the present application, and a person skilled in the art can obtain other figures according to these figures without paying creative work.
FIG. 1 is a schematic flow chart of the implementation of a method for coordinated control over starting and gear shifting of an engine of a vehicle according to an embodiment of the present application;
FIG. 2 is a schematic structural diagram of a P2-architecture hybrid-power system in the prior art;
FIG. 3 is a schematic block diagram of an apparatus for coordinated control over starting and gear shifting of an engine of a vehicle according to an embodiment of the present application; and
FIG. 4 is a schematic block diagram of a terminal device according to an embodiment of the present application.

### DETAILED DESCRIPTION

In the following description, in order for description rather than limitation, specific details such as particular system structures and techniques are provided, to facilitate to thoroughly comprehend embodiments of the present application. However, a person skilled in the art should clearly know that the present application may also be implemented in the embodiments that do not have those particular details. In other cases, the detailed description on the well-known systems, devices, circuits and methods is omitted, to prevent affecting the description on the present application by unnecessary details.

In order to illustrate the technical solutions according to the present application, they will be described below with reference to specific embodiments.

It should also be noted that the description on the technical solutions below involves some commonly used expressions in the art, and those commonly used expressions and specific meanings thereof are as follows:
The expressions "clutch to reduce a/the torque" and "clutch inside a/the gearbox to reduce a/the torque" refer to that the clutch reduces the torque, and the input side and the output side of the clutch are opened and disengaged, and the torque transmitted by the clutch is reduced. When the input side and the output side of the clutch are completely disengaged, the torque that the clutch transmits is 0.

The expressions "clutch to increase a/the torque" and "clutch inside a/the gearbox to increase a/the torque" refer to that the clutch increases the torque, and the input side and the output side of the clutch are pressed tightly, and the torque transmitted by the clutch is increased.

The expressions "motor to reduce a/the torque" and "engine to reduce a/the torque" refer to that the torque of the power outputting terminal of the motor or the engine is reduced.

The expressions "motor to increase a/the torque" and "engine to increase a/the torque" refer to that the torque of the power outputting terminal of the motor or the engine is increased.

The expression "return-torque" refers to that when a gear-shifting is completed, the torque of the clutch returns to the torque which is the same as the original torque, i.e. the same as the torque of the clutch before reducing or increasing.

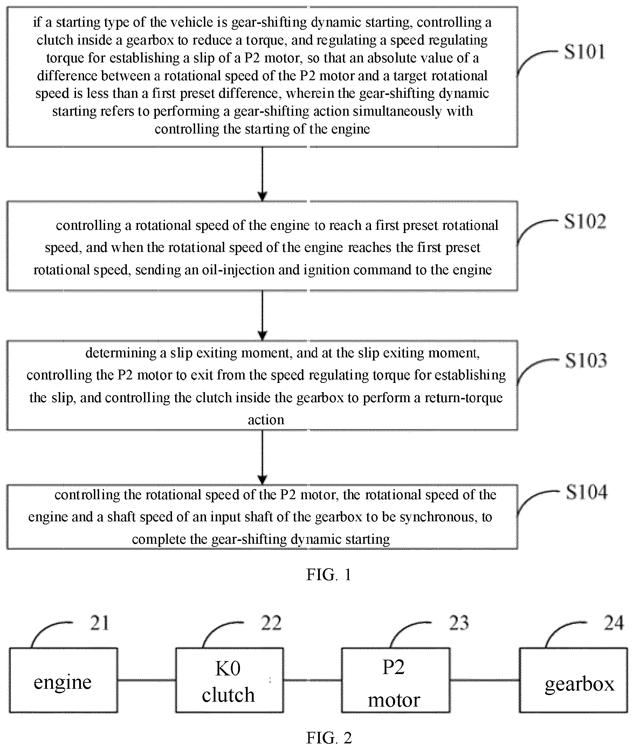

FIG. 1 is a schematic flow chart of the implementation of a method for coordinated control over starting and gear shifting of an engine of a vehicle according to an embodiment of the present application. For the convenience of description, merely the parts relevant to the embodiments of the present application are shown. The embodiments of the present application may be performed by a terminal device. The terminal device may be an HCU.

As shown in FIG. 1, the method may include the following steps S101 to S104.

At S101, if a starting type of the vehicle is gear-shifting dynamic starting, controlling a clutch inside a gearbox to reduce a torque, and regulating a speed regulating torque for establishing a slip of a P2 motor, so that an absolute value of a difference between a rotational speed of the P2 motor and a target rotational speed is less than a first preset difference, wherein the gear-shifting dynamic starting refers to performing a gear-shifting action simultaneously with controlling the starting of the engine.

FIG. 2 is a schematic structural diagram of a P2-architecture hybrid-power system. As shown in FIG. 2, an engine 21, a K0 clutch 22, a P2 motor 23 and a gearbox 24 are sequentially connected. The gearbox 24 may be an HDCT, and may include a K1 clutch and a K2 clutch. A TCU may control the gearbox 24.

In the embodiments of the present application, firstly, a working-condition determining stage is needed, that is, the starting type of the vehicle is determined. The HCU defines a new dynamic starting type, i.e., the gear-shifting dynamic starting. If the starting type is not the gear-shifting dynamic starting, then the steps S101-S104 are not executed, but the other steps are executed according to the starting type. If the starting type is the gear-shifting dynamic starting, then the steps S101-S104 are executed, to complete the process of the gear-shifting dynamic starting. The gear-shifting dynamic starting refers to performing a gear-shifting action simultaneously with controlling the starting of the engine; in other words, the starting of the engine and the gear shifting are simultaneously performed. Optionally, the gear-shifting action may be an upshifting action.

The purpose of the dynamic starting is that, when the engine is dragged to a certain value, the K0 clutch can be opened, to remove the dragging torque of the P2 motor. In this way, the three clutches can be prevented from acting simultaneously, thereby the fluctuation of the torque of the P2 motor is prevented from causing fluctuation of the rotational speed of the output terminal of the P2 motor, which causes fluctuation of the acceleration of the shaft end. The three clutches refer to the K0 clutch in the P2 architecture and the K1 clutch and the K2 clutch in the HDCT.

After it is determined that the starting type is the gear-shifting dynamic starting, a stage of establishing the slip by the HCU is entered, i.e., controlling the clutch inside the gearbox to reduce the torque, and regulating the speed regulating torque for establishing the slip of the P2 motor, so that the absolute value of the difference between the rotational speed of the P2 motor and the target rotational speed is less than a first preset difference.

The establishing the slip refers to causing the power outputting shaft of the P2 motor and the output shaft of the clutch of the gearbox to have a rotational-speed difference. The power outputting shaft of the P2 motor and the input shaft of the clutch of the gearbox are connected. After the clutch of the gearbox reduces the torque, the torque of its input shaft is not totally transmitted to its output shaft, therefore, there may be a rotational-speed difference between the output shaft and the input shaft of the clutch of the gearbox, which causes that a rotational-speed difference may also be established between the power outputting shaft of the P2 motor and the output shaft of the clutch of the gearbox.

Setting the speed regulating torque of the P2 motor is for establishing the slip. The P2 motor increases the torque to a specific value, and the rotational speed is reduced, and the specific torque value is the speed regulating torque.

In an embodiment of the present application, controlling the clutch inside the gearbox to reduce the torque in S101 stated above may include:
obtaining a driving torque of the P2 motor, and sending the driving torque to a TCU, so that the TCU, according to the driving torque, controls the clutch inside the gearbox to reduce the torque. The driving torque may be the current outputted torque of the P2 motor, and the TCU may, according to the current outputted torque, calculate the numerical value of the torque of the clutch of the gearbox that is required to be reduced.

Specifically, the TCU may, according to the driving torque of the P2 motor sent by the HCU, control the corresponding clutch in the gearbox to reduce the torque. The torque of the clutch that is reduced may be referred to as a δ torque. The δ torque can compensate for the falling of the rotational speed of the P2 motor caused by the increasing of the load of the engine, to prevent the falling of the rotational speed from being transmitted to the shaft end, which causes the fluctuation of the acceleration.

In the HDCT, the K1 clutch is responsible for the torque transmission of the gears of the odd numbers, and the K2 clutch is responsible for the torque transmission of the gears of the even numbers.

Optionally, when the clutch to reduce the torque happens, if the gear-shifting action is happening in the gearbox, the K1 clutch and the K2 clutch operate simultaneously, and the clutch to reduce the torque is controlled, the clutch is corresponding to the gear after the gear shifting. In other words, if the gear after the gear is shifted is an odd-number gear, then the K1 clutch in the gearbox may be controlled to reduce the torque, and if the gear after the gear is shifted is an even-number gear, then the K2 clutch in the gearbox may be controlled to reduce the torque.

Optionally, when the clutch of the gearbox reduces the torque, if there is not a gear-shifting action in the gearbox, one of the K1 clutch and the K2 clutch operates, then the clutch corresponding to the current gear is controlled to reduce the torque. In other words, if the current gear is an odd-number gear, then the K1 clutch in the gearbox may be controlled to reduce the torque; if the current gear is an even-number gear, then the K2 clutch in the gearbox may be controlled to reduce the torque.

In an embodiment of the present application, regulating the speed regulating torque for establishing the slip of the P2 motor in S101 stated above may include:
obtaining a target slip, and regulating the speed regulating torque of the P2 motor, so that the slip of the P2 motor reaches the target slip.

The target slip refers to the rotational-speed difference that is required to exist between the power outputting shaft of the P2 motor and the output shaft of the clutch of the gearbox. The target slip is generally a numerical value that has been preset inside the HCU. After the target slip is reached, the power transmission between the P2 motor and the gearbox is weakened, thus the fluctuation of the shaft speed of the P2 motor can be prevented from being transmitted to the shaft end via the gearbox, and the drivability of the vehicle is affected.

The characteristics of the P2 architecture decide that the P2 motor is required to establish a sufficient slip to offset the falling of the rotational speed of the P2 motor caused by the torque increasing of the K0 clutch for dragging the engine. Therefore, a target slip is set inside the HCU, and the speed regulating torque of the P2 motor may be regulated in real time by using PID control, to cause the slip of the P2 motor to reach the target slip. The speed difference between the actual rotational speed and the target rotational speed of the P2 motor is always within a reasonable range; in other words, the absolute value of the difference between the actual rotational speed and the target rotational speed of the P2 motor is less than a first preset difference.

The first preset difference may be set according to practical demands. That the slip of the P2 motor reaches the target slip may be that the absolute value of the difference between the slip and the target slip of the P2 motor is less than a preset slip difference. The preset slip difference may be a small value, and may be set according to practical demands.

At S102, controlling a rotational speed of the engine to reach a first preset rotational speed, and when the rotational speed of the engine reaches the first preset rotational speed, sending an oil-injection and ignition command to the engine.

In an embodiment of the present application, controlling the rotational speed of the engine to reach the first preset rotational speed in S102 stated above may include:
controlling a K0 clutch and the P2 motor to increase a torque, respectively, so that the rotational speed of the engine reaches the first preset rotational speed.

After S101, a dragging stage is entered. At the dragging stage, the HCU starts controlling the K0 clutch and the P2 motor to increase the torque, respectively, which may specifically include controlling the K0 clutch to increase the torque, and controlling the P2 motor to increase the dragging torque, thereby the friction torque of the engine is overcome, thus the rotational speed of the engine is dragged to the first preset rotational speed. The first preset rotational speed may be set according to practical demands.

When the rotational speed of the engine is controlled to reach the first preset rotational speed, an oil-injection and ignition command is sent to the engine, to control the engine to inject oil and ignite.

A suitable ignition command has a large influence on the entire-vehicle drivability. If, when the rotational speed of the engine is lower, the oil-injection and ignition command is sent to the HCU, the engine has a high oil-injection amount, which causes that, at the moment of the oil injection and ignition, the torque of the crankshaft end of the engine is very high. This part of torque is transmitted to the wheel end via the K0 clutch and the subsequent transmitting parts, so that the entire vehicle suddenly accelerates, which deteriorates the drivability. However, if the oil-injection and ignition command is sent when the rotational speed of the engine is higher, i.e., when the first preset rotational speed is reached, the crankshaft end of the engine has a lower torque, and the torque transmitted to the wheel end is limited, which has a lower affection on the drivability.

At S103, determining a slip exiting moment, and at the slip exiting moment, controlling the P2 motor to exit from the speed regulating torque for establishing a slip, and controlling the clutch inside the gearbox to perform a return-torque action.

In an embodiment of the present application, determining the slip exiting moment in S103 stated above may include:
monitoring the rotational speed of the engine and a torque of a K0 clutch; and
determining a moment when the rotational speed of the engine is greater than or equal to a second preset rotational speed and the torque of the K0 clutch is less than or equal to a preset torque to be the slip exiting moment.

After the engine injects oil and ignites, a slip exiting stage is entered. The dragging torque to the engine by the P2 motor that is obtained by the internal calculation of the HCU is not a constant value, but is a table that is calculated according to various conditions, which presents an overall trend of firstly ascending and subsequently descending. That an excessively large dragging torque occurs after the engine is dragged to a certain rotational speed does not have any advantage. Therefore, it is required to exit from the dragging torque with a gradient, to cause the P2 motor and the K0 clutch to reduce the torque.

The HCU decides the slip exiting moment, i.e., the moment when the speed regulating torque exits, according to the rotational speed of the engine and the actual torque of the K0 clutch in the dragging process. At that moment, the HCU controls the P2 motor to exit from the speed regulating torque for establishing the slip; in other words, the speed regulating torque no longer serves as the torque value for controlling the P2 motor. Simultaneously, the HCU may send an instruction to the TCU, to cause the TCU to control the clutch inside the gearbox to perform a return-torque action, i.e., adding again the δ torque of the clutch inside the gearbox that is reduced in S101. In the above-described process, the torque of the K0 clutch decreases gradually.

The second preset rotational speed may be equal to the first preset rotational speed, and may also be greater than the first preset rotational speed, which may be set according to practical demands. The preset torque may be set according to practical demands.

After S103 is executed, a stage of torque interaction of the clutches of the gearbox is entered. At this stage, any controlling action is not performed in the HCU, and the clutches inside the gearbox performs torque interaction of gear shifting, i.e., the process in which one clutch reduces the torque to be opened and the other clutch increases the torque to be pressed tightly. At this moment, the K0 clutch is in the opening state or in a state in which the torque is very low, and the engine relies on the inertia moment of itself to cause the rotational speed to increase to follow the rotational speed of the P2 motor. Because, at this moment, the K0 clutch is in the opening state or in a state in which the torque is very low, even though the shaft speed at one side of the P2 motor and the gearbox increases, the increasing shaft speed is not transmitted to the engine, thereby a high rotational speed of the engine at a low vehicle speed is prevented, and the NVH performance of the vehicle is improved.

At S104, controlling the rotational speed of the P2 motor, the rotational speed of the engine and a shaft speed of an input shaft of the gearbox to be synchronous, to complete the gear-shifting dynamic starting.

In an embodiment of the present application, controlling the rotational speed of the P2 motor, the rotational speed of the engine and the shaft speed of the input shaft of the gearbox to be synchronous in S104 stated above may include:
when an absolute value of a difference between the rotational speed of the engine and the rotational speed of the P2 motor is less than a second preset difference, controlling the K0 clutch to increase the torque, so that the rotational speed of the engine and the rotational speed of the P2 motor are synchronous; and
controlling the P2 motor to reduce the speed regulating torque, so that the rotational speed of the P2 motor, the rotational speed of the engine and the shaft speed of the input shaft of the gearbox are synchronous.

In an embodiment of the present application, controlling the P2 motor to reduce the speed regulating torque may include:
receiving a quick-torque-reduction request sent by the TCU, and according to the quick-torque-reduction request, controlling the P2 motor to reduce the speed regulating torque.

After the stage of torque interaction of the clutches of the gearbox, a stage at which the K0 clutch increases the torque to cause the rotational speed of the P2 motor and the rotational speed of the engine to be synchronous is entered. At this stage, the HCU, when identifies that the absolute value of the difference between the rotational speed of the engine and the rotational speed of the P2 motor is less than a second preset difference, controls the K0 clutch to increase the torque, to cause the rotational speed of the engine and the rotational speed of the P2 motor to be synchronous.

Subsequently, a stage at which the rotational speed of the P2 motor, the rotational speed of the engine and the shaft speed of the input shaft of the gearbox are synchronous is entered. At that stage, the TCU sends a quick-torque-reduction request to the HCU, i.e., a quick-reduction request, and the request is used to instruct the HCU to reduce the speed regulating torque of the P2 motor. The HCU, according to the request, controls the P2 motor to reduce the speed regulating torque, to cause the rotational speed of the P2 motor to decrease, thereby that the rotational speed of the P2 motor, the rotational speed of the engine and the shaft speed of the input shaft of the gearbox are synchronous is realized, and the process of the gear-shifting dynamic starting is completed.

Optionally, the method according to the embodiments of the present application is suitable for P2-architecture hybrid-power vehicles.

In embodiments of the present application, firstly, if a starting type of the vehicle is gear-shifting dynamic starting, a clutch inside a gearbox is controlled to reduce a torque, and a speed regulating torque for establishing a slip of a P2 motor is regulated, so that an absolute value of a difference between a rotational speed of the P2 motor and a target rotational speed is less than a first preset difference; subsequently, a rotational speed of the engine is controlled to reach a first preset rotational speed, and when the rotational speed of the engine reaches the first preset rotational speed, an oil-injection and ignition command is sent to the engine; subsequently, a slip exiting moment is determined, and at the slip exiting moment, the P2 motor is controlled to exit from the speed regulating torque for establishing the slip, and the clutch inside the gearbox is controlled to perform a return-torque action; and finally, the rotational speed of the P2 motor, the rotational speed of the engine and a shaft speed of an input shaft of the gearbox are controlled to be synchronous, to complete the gear-shifting dynamic starting. The embodiments of the present application can effectively solve the problem in the prior art that the rotational speed of the engine is high and the entire-vehicle NVH performance is poor at a low vehicle speed, and the entire-vehicle NVH performance can be improved. At the same time, the engine starting-stopping controlling strategy can be further improved, so that the engine starting-stopping controlling strategy is more complete and reliable.

The controlling method according to the present application, by using the one process of the gear-shifting dynamic starting, simultaneously completes the two actions of the starting of the engine and the gear shifting of the gearbox. In the process of the gear-shifting dynamic starting, when the engine is started, the clutch inside the gearbox reduces the torque, and simultaneously the P2 motor is controlled to establish the slip, to reduce or even eliminate the fluctuation of the rotational speed of the P2 motor. Even though the P2 motor has fluctuation of the rotational speed, because the clutch inside the gearbox reduces the torque, the power transmission at the output side of the P2 motor and the gearbox is weakened, and the fluctuation of the rotational speed of the P2 motor is not transmitted to the shaft end via the gearbox, which prevents the fluctuation of the acceleration of the vehicle, and the drivability is improved. When the gearbox is shifted gear, the K0 clutch is in the opening state or in a state in which the torque is very low, the shaft speed at one side of the P2 motor and the gearbox is not transmitted to the engine, thereby the rotational speed of the engine is prevented from increasing at a low vehicle speed, and the NVH performance of the vehicle is improved.

It should be understood that the size of the serial numbers of the steps in the above embodiments do not mean the order of executing sequence, and the executing sequence of the steps should be decided according to their functions and internal logic, and should not construct any limitation to the implementing process of the embodiments of the present application.

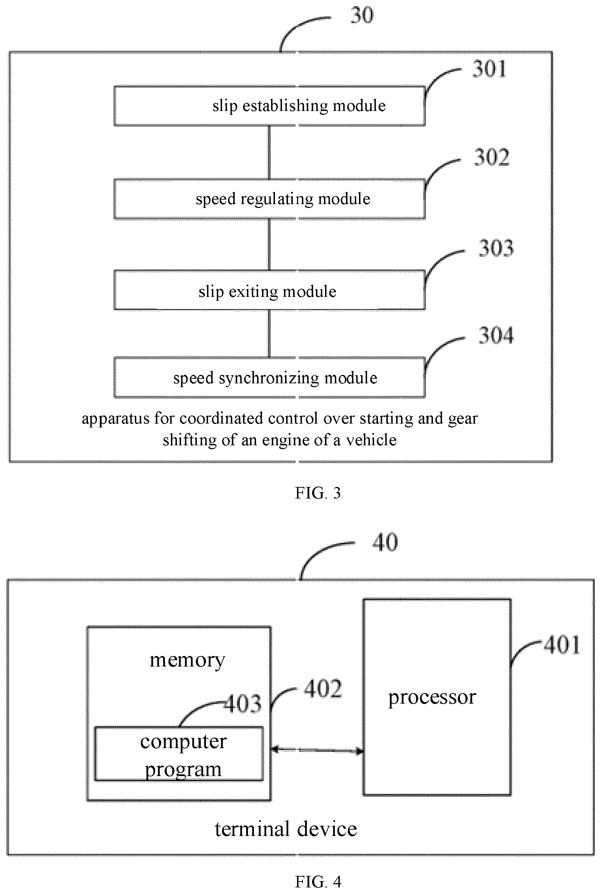

As corresponding to the method for the coordinated control over the starting and the gear shifting of the engine of the vehicle, an embodiment of the present application further provides an apparatus for coordinated control over starting and gear shifting of an engine of a vehicle, which has the advantageous effects the same as those of the method for the coordinated control over the starting and the gear shifting of the engine of the vehicle. FIG. 3 is a schematic block diagram of an apparatus for coordinated control over starting and gear shifting of an engine of a vehicle according to an embodiment of the present application. For the convenience of the description, merely the parts relevant to the embodiments of the present application are shown.

In an embodiment of the present application, the apparatus 30 for the coordinated control over the starting and the gear shifting of the engine of the vehicle may include a slip establishing module 301, a speed regulating module 302, a slip exiting module 303 and a speed synchronizing module 304.

The slip establishing module 301 is configured for, if a starting type of the vehicle is gear-shifting dynamic starting, controlling a clutch inside a gearbox to reduce a torque, and regulating a speed regulating torque for establishing a slip of a P2 motor, so that an absolute value of a difference between a rotational speed of the P2 motor and a target rotational speed is less than a first preset difference, wherein the gear-shifting dynamic starting refers to performing a gear-shifting action simultaneously with controlling the starting of the engine.

The speed regulating module 302 is configured for controlling a rotational speed of the engine to reach a first preset rotational speed, and when the rotational speed of the engine reaches the first preset rotational speed, sending an oil-injection and ignition command to the engine.

The slip exiting module 303 is configured for determining a slip exiting moment, and at the slip exiting moment, controlling the P2 motor to exit from the speed regulating torque for establishing the slip, and controlling the clutch inside the gearbox to perform a return-torque action.

The speed synchronizing module 304 is configured for controlling the rotational speed of the P2 motor, the rotational speed of the engine and a shaft speed of an input shaft of the gearbox to be synchronous, to complete the gear-shifting dynamic starting.

Optionally, the slip establishing module 301 may also be configured for:
obtaining a driving torque of the P2 motor, and sending the driving torque to a TCU, so that the TCU, according to the driving torque, controls the clutch inside the gearbox to reduce the torque.

Optionally, the slip establishing module 301 may also be configured for:
obtaining a target slip, and regulating the speed regulating torque of the P2 motor, so that the slip of the P2 motor reaches the target slip.

Optionally, the speed regulating module 302 may also be configured for:
controlling a K0 clutch and the P2 motor to increase the torque, respectively, so that the rotational speed of the engine reaches the first preset rotational speed.

Optionally, the slip exiting module 303 may also be configured for:
monitoring the rotational speed of the engine and a torque of a K0 clutch; and
determining a moment when the rotational speed of the engine is greater than or equal to a second preset rotational speed and the torque of the K0 clutch is less than or equal to a preset torque to be the slip exiting moment.

Optionally, the speed synchronizing module 304 may also be configured for:
when an absolute value of a difference between the rotational speed of the engine and the rotational speed of the P2 motor is less than a second preset difference, controlling a K0 clutch to increase a torque, so that the rotational speed of the engine and the rotational speed of the P2 motor are synchronous; and
controlling the P2 motor to reduce the speed regulating torque, so that the rotational speed of the P2 motor, the rotational speed of the engine and the shaft speed of the input shaft of the gearbox are synchronous.

Optionally, the speed synchronizing module 304 may also be configured for:
receiving a quick-torque-reduction request sent by the TCU, and according to the quick-torque-reduction request, controlling the P2 motor to reduce the speed regulating torque.

A person skilled in the art can clearly understand that, in order for convenience and brevity of the description, the division of the above functional units and modules is merely taken as an example for the description. In practical applications, the above functions may be assigned to be completed by different functional units and modules according to demands, i.e., dividing the internal structure of the apparatus for the coordinated control over the starting and the gear shifting of the engine of the vehicle into different functional units or modules, to complete all or some of the functions described above. The functional units and modules in the embodiments may be integrated into one processing unit, or the units may also separately physically exist, or two or more of the units may also be integrated into one unit. The above-described integrated unit may be implemented in the form of hardware, and may also be implemented in the form of a software function unit. In addition, the specific names of the functional units and modules are merely for the convenience of distinguishing from each other, and are not intended to limit the protection scope of the present application. The specific working processes of the units and modules in the above-described devices may refer to the corresponding processes in the above-described process embodiments, and are not discussed further herein.

FIG. 4 is a schematic block diagram of a terminal device according to an embodiment of the present application. As shown in FIG. 4, the terminal device 40 according to the present embodiment includes one or more processors 401, a memory 402, and a computer program 403 that is stored in the memory 402 and executable in the processors 401. The processors 401, when executing the computer program 403, implement the steps in the above embodiments of the method for the coordinated control over the starting and the gear shifting of the engine of the vehicle, for example, the steps S101 to S104 shown in FIG. 1. Alternatively, the processors 401, when executing the computer program 403, implement the functions of the modules/units of the above embodiments of the apparatus for the coordinated control over the starting and the gear shifting of the engine of the vehicle, for example, the functions of the modules 301 to 304 shown in FIG. 3.

Exemplarily, the computer program 403 may be divided into one or more modules/units, and the one or more modules/units are stored in the memory 402, and are executed by the processors 401, to complete the present application. The one or more modules/units may be a series of computer program instruction segments that can complete specific functions, and the instruction segments are used to describe the executing process of the computer program 403 in the terminal device 40. For example, the computer program 403 may be divided into a slip establishing module, a speed regulating module, a slip exiting module and a speed synchronizing module, and the specific functions of the modules are as follows:
a slip establishing module configured for, if a starting type of the vehicle is gear-shifting dynamic starting, controlling a clutch inside a gearbox to reduce a torque, and regulating a speed regulating torque for establishing a slip of a P2 motor, so that an absolute value of a difference between a rotational speed of the P2 motor and a target rotational speed is less than a first preset difference, wherein the gear-shifting dynamic starting refers to performing a gear-shifting action simultaneously with controlling the starting of the engine;
a speed regulating module configured for controlling a rotational speed of the engine to reach a first preset rotational speed, and when the rotational speed of the engine reaches the first preset rotational speed, sending an oil-injection and ignition command to the engine;
a slip exiting module configured for determining a slip exiting moment, and at the slip exiting moment, controlling the P2 motor to exit from the speed regulating torque for establishing the slip, and controlling the clutch inside the gearbox to perform a return-torque action; and
a speed synchronizing module configured for controlling the rotational speed of the P2 motor, the rotational speed of the engine and a shaft speed of an input shaft of the gearbox to be synchronous, to complete the gear-shifting dynamic starting.

The other modules or units may refer to the description in the embodiments shown in FIG. 3, and are not discussed further herein.

The terminal device 40 may be the above-described HCU, and may also be a computing device such as a desktop computer, a notebook computer, a palmtop and a cloud server. The terminal device 40 includes include but are not limited to the processors 401 and the memory 402. A person skilled in the art can understand that FIG. 4 is merely an example of the terminal device 40, does not limit the terminal device 40, and may include more or fewer components than those shown in the figure, or a combination of some of the components, or different components. For example, the terminal device 40 may further include an input device, an output device, a network accessing device, a bus and so on.

The processors 401 may be a central processing unit (CPU), and may also be another generic processor, a digital signal processor (DSP), an application specific integrated circuit (ASIC), a field-programmable gate array (FPGA) or another programmable logic device, discrete gate or transistor logic device, discrete hardware assembly and so on. The generic processor may be a microprocessor, or the processor may also be any conventional processor.

The memory 402 may be an internal storage unit of the terminal device 40, for example, a hard disk or an internal memory of the terminal device 40. The memory 402 may also be an external storage device of the terminal device 40, for example, a plug-connected hard disk, a smart media card (SMC), a secure digital (SD) card, a flash card, and so on, that the terminal device 40 is equipped with. Further, the memory 402 may also include not only the internal storage unit of the terminal device 40 but also the external storage device. The memory 402 is used to store the computer program 403, and other programs and data that are required by the terminal device 40. The memory 402 may also be used to temporarily store the data that have already been outputted or will be outputted.

In the above embodiments, the descriptions on the embodiments have respective emphases, the parts of a certain embodiment that is not described in detail or set forth may refer to the relevant descriptions on the other embodiments.

A person skilled in the art can envisage that the units and the algorithm steps of the examples described with reference to the embodiments disclosed herein may be implemented by using electronic hardware or a combination of computer software and electronic hardware. Whether those functions are executed by hardware or software depends on the particular applications and the design constraints of the technical solutions. A person skilled in the art may employ different methods to implement the described functions with respect to each of the particular applications, but the implementations should not be considered as extending beyond the scope of the present application.

In the embodiments of the present application, it should be understood that the disclosed apparatus and method for the coordinated control over the starting and the gear shifting of the engine of the vehicle may be implemented in other manners. For example, the above-described embodiments of the apparatus for the coordinated control over the starting and the gear shifting of the engine of the vehicle are merely illustrative. For example, the division of the modules or units is merely a division in the logic functions, and in the actual implementation there may be another mode of division. For example, multiple units or components may be combined or may be integrated into another system, or some of the features may be omitted, or not implemented. Additionally, the coupling or direct coupling or communicative connection between the illustrated or discussed components may be via some interfaces or the indirect coupling or communicative connection between the devices or units, and may be electric, mechanical or in other forms.

The units that are described as separate components may or may not be physically separate, and the components that are displayed as units may or may not be physical units; in other words, they may be located at the same one location, and may also be distributed to a plurality of network units. Some or all of the units may be selected according to actual demands to realize the purposes of the solutions of the embodiments.

Furthermore, the functional units according to the embodiments of the present application may be integrated into one processing unit, or the units may also separately physically exist, or two or more of the units may also be integrated into one unit. The above-described integrated unit may be implemented in the form of hardware, and may also be implemented in the form of a software function unit.

The integrated modules/units, if implemented in the form of software function units and sold or used as an independent product, may be stored in a computer-readable storage medium. On the basis of such a comprehension, all or some of the processes of the methods according to the embodiments of the present application may be implemented by relative hardware according to an instruction from a computer program, the computer program may be stored in a computer-readable storage medium, and the computer program, when executed by a processor, can implement the steps of the above process embodiments. The computer program includes a computer program code, and the computer program code may be in a form of a source code, an object code, an executable file, some intermediate forms, and so on. The computer-readable medium may include any entity or device that can carry the computer program code, including a recording medium, a USB flash disk, a mobile hard disk drive, a diskette, an optical disk, a computer memory, a read-only memory (ROM), a random access memory (RAM), an electric carrier signal, a telecommunication signal, a software distribution medium and so on. It should also be noted that the contents included by the computer-readable medium may be properly added or reduced according to the requirements by the legislation and the patent practices within jurisdictions. For example, within certain jurisdictions, according to the legislation and the patent practices, the computer-readable medium does not include an electric carrier signal and a telecommunication signal.

## Claims

1. A method for coordinated control over starting and gear shifting of an engine of a vehicle, **characterized in that**, the method comprises:
if a starting type of the vehicle is gear-shifting dynamic starting, controlling a clutch inside a gearbox to reduce a torque, and regulating a speed regulating torque for establishing a slip of a P2 motor, so that an absolute value of a difference between a rotational speed of the P2 motor and a target rotational speed is less than a first preset difference, wherein the gear-shifting dynamic starting refers to performing a gear-shifting action simultaneously with controlling the starting of the engine;
controlling a rotational speed of the engine to reach a first preset rotational speed, and when the rotational speed of the engine reaches the first preset rotational speed, sending an oil-injection and ignition command to the engine;
determining a slip exiting moment, and at the slip exiting moment, controlling the P2 motor to exit from the speed regulating torque for establishing the slip, and controlling the clutch inside the gearbox to perform a return-torque action; and
controlling the rotational speed of the P2 motor, the rotational speed of the engine and a shaft speed of an input shaft of the gearbox to be synchronous, to complete the gear-shifting dynamic starting.

2. The method for the coordinated control over the starting and the gear shifting of the engine of the vehicle according to claim 1, **characterized in that**, controlling the clutch inside the gearbox to reduce the torque comprises:
obtaining a driving torque of the P2 motor, and sending the driving torque to a transmission control unit (TCU), so that the TCU, according to the driving torque, controls the clutch inside the gearbox to reduce the torque.

3. The method for the coordinated control over the starting and the gear shifting of the engine of the vehicle according to claim 1, **characterized in that**, regulating the speed regulating torque for establishing the slip of the P2 motor comprises:
obtaining a target slip, and regulating the speed regulating torque of the P2 motor, so that the slip of the P2 motor reaches the target slip.

4. The method for the coordinated control over the starting and the gear shifting of the engine of the vehicle according to claim 3, **characterized in that**, the target slip is a preset value inside a hybrid control unit (HCU).

5. The method for the coordinated control over the starting and the gear shifting of the engine of the vehicle according to claim 1, **characterized in that**, controlling the rotational speed of the engine to reach the first preset rotational speed comprises:
controlling a K0 clutch and the P2 motor to increase the torque, respectively, so that the rotational speed of the engine reaches the first preset rotational speed.

6. The method for the coordinated control over the starting and the gear shifting of the engine of the vehicle according to claim 1, **characterized in that**, determining the slip exiting moment comprises:
monitoring the rotational speed of the engine and a torque of a K0 clutch; and
determining a moment when the rotational speed of the engine is greater than or equal to a second preset rotational speed and the torque of the K0 clutch is less than or equal to a preset torque to be the slip exiting moment.

7. The method for the coordinated control over the starting and the gear shifting of the engine of the vehicle according to claim 6, **characterized in that**, the second preset rotational speed is greater than or equal to the first preset rotational speed.

8. The method for the coordinated control over the starting and the gear shifting of the engine of the vehicle according to claim 1, **characterized in that**, controlling the P2 motor to exit from the speed regulating torque for establishing the slip comprises:
controlling the P2 motor to reduce a torque with a gradient, to exit from the speed regulating torque.

9. The method for the coordinated control over the starting and the gear shifting of the engine of the vehicle according to claim 1, **characterized in that**, at the slip exiting moment, a K0 clutch starts reducing a torque with a gradient.

10. The method for the coordinated control over the starting and the gear shifting of the engine of the vehicle according to claim 1, **characterized in that**, controlling the clutch inside the gearbox to perform the return-torque action comprises:
causing the clutch inside the gearbox to increase the torque, and the increased torque value being equal to a torque value by which the torque is reduced in the action of controlling the clutch inside the gearbox to reduce the torque.

11. The method for the coordinated control over the starting and the gear shifting of the engine of the vehicle according to any one of claims 1 to 10, **characterized in that**, controlling the rotational speed of the P2 motor, the rotational speed of the engine and the shaft speed of the input shaft of the gearbox to be synchronous comprises:
when an absolute value of a difference between the rotational speed of the engine and the rotational speed of the P2 motor is less than a second preset difference, controlling a K0 clutch to increase a torque, so that the rotational speed of the engine and the rotational speed of the P2 motor are synchronous; and
controlling the P2 motor to reduce the speed regulating torque, so that the rotational speed of the P2 motor, the rotational speed of the engine and the shaft speed of the input shaft of the gearbox are synchronous.

12. The method for the coordinated control over the starting and the gear shifting of the engine of the vehicle according to claim 11, **characterized in that**, controlling the P2 motor to reduce the speed regulating torque comprises:
receiving a quick-torque-reduction request sent by a TCU, and according to the quick-torque-reduction request, controlling the P2 motor to reduce the speed regulating torque.

13. An apparatus for coordinated control over starting and gear shifting of an engine of a vehicle, **characterized in that**, the apparatus comprises:
a slip establishing module (301) configured for, if a starting type of the vehicle is gear-shifting dynamic starting, controlling a clutch inside a gearbox to reduce a torque, and regulating a speed regulating torque for establishing a slip of a P2 motor, so that an absolute value of a difference between a rotational speed of the P2 motor and a target rotational speed is less than a first preset difference, wherein the gear-shifting dynamic starting refers to performing a gear-shifting action simultaneously with controlling the starting of the engine;
a speed regulating module (302) configured for controlling a rotational speed of the engine to reach a first preset rotational speed, and when the rotational speed of the engine reaches the first preset rotational speed, sending an oil-injection and ignition command to the engine;
a slip exiting module (303) configured for determining a slip exiting moment, and at the slip exiting moment, controlling the P2 motor to exit from the speed regulating torque for establishing the slip, and controlling the clutch inside the gearbox to perform a return-torque action; and
a speed synchronizing module (304) configured for controlling the rotational speed of the P2 motor, the rotational speed of the engine and a shaft speed of an input shaft of the gearbox to be synchronous, to complete the gear-shifting dynamic starting.

14. A computer program (403), **characterized in that**, the computer program (403) is configured to implement the steps of the method for the coordinated control over the starting and the gear shifting of the engine of the vehicle according to any one of claims 1 to 7.

15. A computer-readable storage medium, **characterized in that**, the computer-readable storage medium stores a computer program (403) according to claim 14, and the computer program (403), when executed by one or more processors (401), implements the steps of the method for the coordinated control over the starting and the gear shifting of the engine of the vehicle according to any one of claims 1 to 7.

## Patentansprüche

1. Verfahren zur koordinierten Steuerung des Starts und der Gangschaltung eines Fahrzeugmotors, **dadurch gekennzeichnet, dass** das Verfahren umfasst:
wenn ein Starttyp des Fahrzeugs ein dynamisches Starten mit Gangschaltung ist, Steuern einer Kupplung innerhalb eines Getriebes, um ein Drehmoment zu reduzieren, und Regulieren eines geschwindigkeitsregulierenden Drehmoments zum Herstellen eines Schlupfes eines P2-Motors, so dass ein absoluter Wert einer Differenz zwischen einer Drehzahl des P2-Motors und einer Zieldrehzahl kleiner als eine erste voreingestellte Differenz ist, wobei sich das dynamische Starten mit Gangschaltung auf das Durchführen eines Schaltvorgangs gleichzeitig mit dem Steuern des Startens des Motors bezieht;
Steuern einer Drehzahl des Motors, um eine erste voreingestellte Drehzahl zu erreichen, und wenn die Drehzahl des Motors die erste voreingestellte Drehzahl erreicht, Senden eines Öleinspritz- und Zündbefehls an den Motor; Bestimmen eines Schlupfausgangsmoments und bei dem Schlupfausgangsmoment Steuern des P2-Motors, um das geschwindigkeitsregulierende Drehmoment zu verlassen, um den Schlupf herzustellen, und Steuern der Kupplung innerhalb des Getriebes, um eine Rückstelldrehmomentaktion durchzuführen; und
Steuern der Drehzahl des P2-Motors, der Drehzahl des Motors und einer Wellendrehzahl einer Eingangswelle des Getriebes so, dass sie synchron sind, um das dynamische Starten mit Gangschaltung zu vervollständigen.

2. Verfahren zur koordinierten Steuerung des Starts und der Gangschaltung des Fahrzeugmotors nach Anspruch 1, **dadurch gekennzeichnet, dass** das Steuern der Kupplung innerhalb des Getriebe zur Reduzierung des Drehmoments umfasst:
Erhalten eines Antriebsdrehmoments des P2-Motors und Senden des Antriebsdrehmoments an eine Getriebesteuerungseinheit (TCU), so dass die TCU entsprechend dem Antriebsdrehmoment die Kupplung innerhalb des Getriebes steuert, um das Drehmoment zu reduzieren.

3. Verfahren zur koordinierten Steuerung des Starts und der Gangschaltung des Fahrzeugmotors nach Anspruch 1, **dadurch gekennzeichnet, dass** die Regelung des geschwindigkeitsregulierenden Drehmoments zur Herstellung des Schlupfes des Motors P2 umfasst:
Erhalten eines Zielschlupfes und Regulieren des geschwindigkeitsregulierenden Drehmoments des P2-Motors, so dass der Schlupf des P2-Motors den Zielschlupf erreicht.

4. Verfahren zur koordinierten Steuerung des Starts und der Gangschaltung des Fahrzeugmotors nach Anspruch 3, **dadurch gekennzeichnet, dass** der Zielschlupf ein voreingestellter Wert innerhalb einer Hybridsteuereinheit (HCU) ist.

5. Verfahren zur koordinierten Steuerung des Starts und der Gangschaltung des Fahrzeugmotors nach Anspruch 1, **dadurch gekennzeichnet, dass** das Steuern der Drehzahl des Motors zum Erreichen der ersten voreingestellten Drehzahl umfasst:
Steuern einer K0-Kupplung bzw. des P2-Motors zur Erhöhung des Drehmoments, so dass die Drehzahl des Motors die erste voreingestellte Drehzahl erreicht.

6. Verfahren zur koordinierten Steuerung des Starts und der Gangschaltung des Fahrzeugmotors nach Anspruch 1, **dadurch gekennzeichnet, dass** das Bestimmen des Schlupfausgangsmoments umfasst:
Überwachen der Drehzahl des Motors und eines Drehmoments einer K0-Kupplung; und
Bestimmen eines Moments, in dem die Drehzahl des Motors größer oder gleich einer zweiten voreingestellten Drehzahl ist und das Drehmoment der K0-Kupplung kleiner oder gleich einem voreingestellten Drehmoment ist, als Schlupfausgangsmoment.

7. Verfahren zur koordinierten Steuerung des Starts und der Gangschaltung des Fahrzeugmotors nach Anspruch 6, **dadurch gekennzeichnet, dass** die zweite voreingestellte Drehzahl größer oder gleich der ersten voreingestellten Drehzahl ist.

8. Verfahren zur koordinierten Steuerung des Starts und der Gangschaltung des Fahrzeugmotors nach Anspruch 1, **dadurch gekennzeichnet, dass** das Steuern des P2-Motors zum Verlassen des geschwindigkeitsregulierenden Drehmoments zur Herstellung des Schlupfs umfasst:
Steuern des P2-Motors zur Reduzierung des Drehmoments mit einem Gradienten, um das geschwindigkeitsregulierende Drehmoment zu verlassen.

9. Verfahren zur koordinierten Steuerung des Anfahrens und des Schaltens des Fahrzeugmotors nach Anspruch 1, **dadurch gekennzeichnet, dass** eine K0-Kupplung beim Schlupfausgangsmoment beginnt, ein Drehmoment mit einem Gradienten zu reduzieren.

10. Verfahren zur koordinierten Steuerung des Starts und der Gangschaltung des Fahrzeugmotors nach Anspruch 1, **dadurch gekennzeichnet, dass** das Steuern der Kupplung im Getriebe zum Durchführen der Rückstelldrehmomentaktion umfasst:
die Kupplung innerhalb des Getriebes wird veranlasst, das Drehmoment zu erhöhen, und der erhöhte Drehmomentwert ist gleich einem Drehmomentwert, um den das Drehmoment bei der Aktion der Steuerung der Kupplung innerhalb des Getriebes zur Reduzierung des Drehmoments reduziert wird.

11. Verfahren zur koordinierten Steuerung des Starts und der Gangschaltung des Fahrzeugmotors nach einem der Ansprüche 1 bis 10, **dadurch gekennzeichnet, dass** das Steuern der Drehzahl des P2-Motors, der Drehzahl des Motors und der Wellendrehzahl der Eingangswelle des Getriebes, so dass diese synchron sind, umfasst:
wenn ein Absolutwert einer Differenz zwischen der Drehzahl des Motors und der Drehzahl des P2-Motors kleiner als eine zweite voreingestellte Differenz ist, Steuern einer K0-Kupplung, um ein Drehmoment zu erhöhen, so dass die Drehzahl des Motors und die Drehzahl des P2-Motors synchron sind; und
Steuern des P2-Motors zur Reduzierung des geschwindigkeitsregulierenden Drehmoments, so dass die Drehzahl des P2-Motors, die Drehzahl des Motors und die Wellendrehzahl der Eingangswelle des Getriebes synchron sind.

12. Verfahren zur koordinierten Steuerung des Starts und der Gangschaltung des Fahrzeugmotors nach Anspruch 11, **dadurch gekennzeichnet, dass** das Steuern des P2-Motors zur Reduzierung des geschwindigkeitsregulierenden Drehmoments umfasst:
Empfangen einer Anforderung zur schnellen Drehmomentreduzierung, die von einer TCU gesendet wird, und Steuern des P2-Motors entsprechend der Anforderung zur schnellen Drehmomentreduzierung, um das geschwindigkeitsregulierende Drehmoment zu reduzieren.

13. Vorrichtung zur koordinierten Steuerung des Starts und der Gangschaltung eines Fahrzeugmotors, **dadurch gekennzeichnet, dass** die Vorrichtung umfasst:
ein Schlupfherstellungsmodul (301), das dazu ausgebildet ist, wenn ein Starttyp des Fahrzeugs ein dynamisches Starten mit Gangschaltung ist, eine Kupplung innerhalb eines Getriebes zu steuern, um ein Drehmoment zu reduzieren, und ein geschwindigkeitsregulierendes Drehmoment zum Herstellen eines Schlupfes eines P2-Motors zu regulieren, so dass ein absoluter Wert einer Differenz zwischen einer Drehzahl des P2-Motors und einer Zieldrehzahl kleiner als eine erste voreingestellte Differenz ist, wobei sich das dynamische Starten mit Gangschaltung auf das Durchführen eines Schaltvorgangs gleichzeitig mit dem Steuern des Startens des Motors bezieht;
ein Drehzahlregelungsmodul (302), das dazu ausgebildet ist, eine Drehzahl des Motors zu steuern, um eine erste voreingestellte Drehzahl zu erreichen, und wenn die Drehzahl des Motors die erste voreingestellte Drehzahl erreicht, einen Öleinspritz- und Zündbefehl an den Motor zu senden;
ein Schlupfausgangsmodul (303), das dazu ausgebildet ist, ein Schlupfausgangsmoment zu bestimmen und bei dem Schlupfausgangsmoment den P2-Motor so zu steuern, dass dieser das geschwindigkeitsregulierende Drehmoment verlässt, um den Schlupf herzustellen, und die Kupplung innerhalb des Getriebes zu steuern, um eine Rückstelldrehmomentaktion durchzuführen; und
ein Drehzahlsynchronisierungsmodul (304), das dazu ausgebildet ist, die Drehzahl des P2-Motors, die Drehzahl des Motors und eine Wellendrehzahl einer Eingangswelle des Getriebes so zu steuern, dass sie synchron sind, um das dynamische Starten mit Gangschaltung zu vervollständigen.

14. Computerprogramm (403), **dadurch gekennzeichnet, dass** das Computerprogramm (403) so ausgebildet ist, dass es die Schritte des Verfahrens zur koordinierten Steuerung des Startens und der Gangschaltung des Motors des Fahrzeugs nach einem der Ansprüche 1 bis 7 implementiert.

15. Computerlesbares Speichermedium, **dadurch gekennzeichnet, dass** das computerlesbare Speichermedium ein Computerprogramm (403) nach Anspruch 14 speichert, und das Computerprogramm (403), wenn es von einem oder mehreren Prozessoren (401) ausgeführt wird, die Schritte des Verfahrens zur koordinierten Steuerung des Startens und der Gangschaltung des Motors des Fahrzeugs nach einem der Ansprüche 1 bis 7 implementiert.

## Revendications

1. Procédé pour la commande coordonnée du démarrage et du changement de rapport d'un moteur d'un véhicule, **caractérisé en ce que** le procédé comprend :
si un type de démarrage du véhicule est un démarrage dynamique par changement de rapport, la commande d'un embrayage à l'intérieur d'une boîte de vitesses pour qu'il réduise un couple, et la régulation d'un couple de régulation de vitesse pour établir un glissement d'un moteur P2, de sorte qu'une valeur absolue d'une différence entre une vitesse de rotation du moteur P2 et une vitesse de rotation cible soit inférieure à une première différence prédéfinie, dans lequel le démarrage dynamique par changement de rapport fait référence à la réalisation d'une action de changement de rapport simultanément à la commande du démarrage du moteur ;
la commande d'une vitesse de rotation du moteur pour qu'elle atteigne une première vitesse de rotation prédéfinie, et lorsque la vitesse de rotation du moteur atteint la première vitesse de rotation prédéfinie, l'envoi d'une instruction d'injection d'huile et d'allumage au moteur ;
la détermination d'un moment de sortie de glissement, et au moment de sortie de glissement, la commande du moteur P2 pour qu'il sorte du couple de régulation de vitesse pour établir le glissement, et la commande de l'embrayage à l'intérieur de la boîte de vitesses pour qu'il réalise une action de retour de couple ; et
la commande de la vitesse de rotation du moteur P2, de la vitesse de rotation du moteur et d'une vitesse d'arbre d'un arbre d'entrée de la boîte de vitesses pour qu'elles soient synchrones, afin de compléter le démarrage dynamique de changement de rapport.

2. Procédé pour la commande coordonnée du démarrage et du changement de rapport du moteur du véhicule selon la revendication 1, **caractérisé en ce que** la commande de l'embrayage à l'intérieur de la boîte de vitesses pour qu'il réduise le couple comprend :
l'obtention d'un couple d'entraînement du moteur P2, et l'envoi du couple d'entraînement à une unité de commande de transmission (TCU), de sorte que la TCU, en fonction du couple d'entraînement, commande l'embrayage à l'intérieur de la boîte de vitesses pour qu'il réduise le couple.

3. Procédé pour la commande coordonnée du démarrage et du changement de rapport du moteur du véhicule selon la revendication 1, **caractérisé en ce que** la régulation du couple de régulation de vitesse pour établir le glissement du moteur P2 comprend :
l'obtention d'un glissement cible, et la régulation du couple de régulation de vitesse du moteur P2, de sorte que le glissement du moteur P2 atteigne le glissement cible.

4. Procédé pour la commande coordonnée du démarrage et du changement de rapport du moteur du véhicule selon la revendication 3, **caractérisé en ce que** le glissement cible est une valeur prédéfinie à l'intérieur d'une unité de commande hybride (HCU).

5. Procédé pour la commande coordonnée du démarrage et du changement de rapport du moteur du véhicule selon la revendication 1, **caractérisé en ce que** la commande de la vitesse de rotation du moteur pour qu'elle atteigne la première vitesse de rotation prédéfinie comprend :
la commande d'un embrayage K0 et du moteur P2 pour qu'ils augmentent le couple, respectivement, de sorte que la vitesse de rotation du moteur atteigne la première vitesse de rotation prédéfinie.

6. Procédé pour la commande coordonnée du démarrage et du changement de rapport du moteur du véhicule selon la revendication 1, **caractérisé en ce que** la détermination du moment de sortie de glissement comprend :
la surveillance de la vitesse de rotation du moteur et d'un couple d'un embrayage K0 ; et
la détermination d'un moment où la vitesse de rotation du moteur est supérieure ou égale à une seconde vitesse de rotation prédéfinie et le couple de l'embrayage K0 est inférieur ou égal à un couple prédéfini pour qu'il soit le moment de sortie de glissement.

7. Procédé pour la commande coordonnée du démarrage et du changement de rapport du moteur du véhicule selon la revendication 6, **caractérisé en ce que** la seconde vitesse de rotation prédéfinie est supérieure ou égale à la première vitesse de rotation prédéfinie.

8. Procédé pour la commande coordonnée du démarrage et du changement de rapport du moteur du véhicule selon la revendication 1, **caractérisé en ce que** la commande du moteur P2 pour qu'il sorte du couple de régulation de vitesse pour établir le glissement comprend :
la commande du moteur P2 pour qu'il réduise un couple avec un gradient, pour qu'il sorte du couple de régulation de vitesse.

9. Procédé pour la commande coordonnée du démarrage et du changement de rapport du moteur du véhicule selon la revendication 1, **caractérisé en ce qu'**au moment de sortie de glissement, un embrayage K0 commence à réduire un couple avec un gradient.

10. Procédé pour la commande coordonnée du démarrage et du changement de rapport du moteur du véhicule selon la revendication 1, **caractérisé en ce que** la commande de l'embrayage à l'intérieur de la boîte de vitesses pour qu'il réalise l'action de retour de couple comprend :
l'amenée de l'embrayage à l'intérieur de la boîte de vitesses à augmenter le couple, et la valeur de couple augmentée étant égale à une valeur de couple de laquelle le couple est réduit lors de l'action de commande de l'embrayage à l'intérieur de la boîte de vitesses pour qu'il réduise le couple.

11. Procédé pour la commande coordonnée du démarrage et du changement de rapport du moteur du véhicule selon l'une quelconque des revendications 1 à 10, **caractérisé en ce que** la commande de la vitesse de rotation du moteur P2, de la vitesse de rotation du moteur et de la vitesse d'arbre de l'arbre d'entrée de la boîte de vitesses pour qu'elles soient synchrones comprend :
lorsqu'une valeur absolue d'une différence entre la vitesse de rotation du moteur et la vitesse de rotation du moteur P2 est inférieure à une seconde différence prédéfinie, la commande d'un embrayage K0 pour qu'il augmente un couple, de sorte que la vitesse de rotation du moteur et la vitesse de rotation du moteur P2 soient synchrones ; et
la commande du moteur P2 pour qu'il réduise le couple de régulation de vitesse, de sorte que la vitesse de rotation du moteur P2, la vitesse de rotation du moteur et la vitesse d'arbre de l'arbre d'entrée de la boîte de vitesses soient synchrones.

12. Procédé pour la commande coordonnée du démarrage et du changement de rapport du moteur du véhicule selon la revendication 11, **caractérisé en ce que** la commande du moteur P2 pour qu'il réduise le couple de régulation de vitesse comprend :
la réception d'une demande de réduction rapide de couple envoyée par une TCU, et selon la demande de réduction rapide de couple, la commande du moteur P2 pour qu'il réduise le couple de régulation de vitesse.

13. Appareil pour la commande coordonnée du démarrage et du changement de rapport d'un moteur d'un véhicule, **caractérisé en ce que** l'appareil comprend :
un module d'établissement de glissement (301) configuré pour, si un type de démarrage du véhicule est un démarrage dynamique à changement de rapport, commander un embrayage à l'intérieur d'une boîte de vitesses pour qu'il réduise un couple, et réguler un couple de régulation de vitesse pour établir un glissement d'un moteur P2, de sorte qu'une valeur absolue d'une différence entre une vitesse de rotation du moteur P2 et une vitesse de rotation cible soit inférieure à une première différence prédéfinie, dans lequel le démarrage dynamique de changement de rapport désigne la réalisation d'une action de changement de rapport simultanément à la commande du démarrage du moteur ;
un module de régulation de vitesse (302) configuré pour commander une vitesse de rotation du moteur pour qu'elle atteigne une première vitesse de rotation prédéfinie, et lorsque la vitesse de rotation du moteur atteint la première vitesse de rotation prédéfinie, envoyer une instruction d'injection d'huile et d'allumage au moteur ;
un module de sortie de glissement (303) configuré pour déterminer un moment de sortie de glissement, et au moment de sortie de glissement, commander le moteur P2 pour qu'il sorte du couple de régulation de vitesse pour établir le glissement, et commander l'embrayage à l'intérieur de la boîte de vitesses pour qu'il réalise une action de retour de couple ; et
un module de synchronisation de vitesse (304) configuré pour commander la vitesse de rotation du moteur P2, la vitesse de rotation du moteur et une vitesse d'arbre d'un arbre d'entrée de la boîte de vitesses pour qu'elles soient synchrones, pour compléter le démarrage dynamique de changement de rapport.

14. Programme informatique (403), **caractérisé en ce que** le programme informatique (403) est configuré pour mettre en œuvre les étapes du procédé pour la commande coordonnée du démarrage et du changement de rapport du moteur du véhicule selon l'une quelconque des revendications 1 à 7.

15. Support de stockage lisible par ordinateur, **caractérisé en ce que** le support de stockage lisible par ordinateur stocke un programme informatique (403) selon la revendication 14, et le programme informatique (403), lorsqu'il est exécuté par un ou plusieurs processeurs (401), met en œuvre les étapes du procédé pour la commande coordonnée du démarrage et du changement de rapport du moteur du véhicule selon l'une quelconque des revendications 1 à 7.
